# EUROPEAN PATENT APPLICATION

(11) **EP 4 752 455 A1**
(43) Date of publication of application: **03.06.2026**
(21) Application number: 25383302.4
(22) Date of filing: 24.11.2025
(51) Int. Cl.: F24S 30/425, F24S 50/20, G05D 3/18, H02S 20/32

(54) **SOLAR TRACKER AND TRACKING AND CALIBRATION METHOD USING SAID TRACKER**

(30) Priority: 29.11.2024 US 202418963779
(71) Applicant: Soltec Innovations, S.L., 30500 Molina de Segura (ES)
(72) Inventor: Molina Cano, Alonso, 30500 Molina de Segura (ES); Pajarón Santos, Pablo, 30500 Molina de Segura (ES); García Vivancos, Marta, 30500 Molina de Segura (ES)
(74) Representative: Isern Patentes y Marcas S.L.

(57) **Abstract**

The tracker comprises: a torque shaft (1) in a tracking direction of rotation; a controller (2) for managing the rotational position of the torque shaft (1); a drive (3) for providing the tracking rotation to the torque shaft (1), and including a motor (4) and a reduction system (5) sandwiched between the motor (4) and the torque shaft (1); and a revolution counter system (6) for controlling and counting the number of revolutions, and the direction of rotation of the motor (4) with respect to a zero position previously stored in the controller (2); the revolution counter system (6) being communicated with the controller (2) and the drive (3) to allow control of the tracking rotation by means of the number of revolutions and the direction of rotation of the motor (4) with respect to the zero position, detected by the revolution counter system (6) **It** allows greater tracking precision, avoiding operating in conditions in which a significant precision error has accumulated in the tracking position.

## Description

### Technical field of the invention

The present invention can be included in the field of solar energy, in particular in the field of solar trackers. More specifically, the invention has as an object a solar tracker and a tracking method using said solar tracker.

### Background of the invention (state of the art)

For solar tracking, solar panels supported by a support structure including a torque element, such as a torque tube, torque box, etc., are arranged to provide the panels with a tracking rotation, and to withstand torque loads generated by the tracking rotation itself, and by external loads, for example wind loads, such that the panels acquire a variable orientation throughout the day (called "solar tracking"), depending on the relative solar position, i.e. on the solar and azimuth heights.

To perform solar tracking, the torque element is rotated by means of a motor and reduction gear system, such that the motor periodically operates for a short time interval to produce a small angle of rotation. There are various tracking control methods which determine rotation criteria to maximise the solar energy obtained depending on various circumstances.

In cases where the referencing system is integrated in the drive itself of the solar tracker, there is, in general, an unavoidable discrepancy between the nominal value and the real value of the angle of rotation which, after a certain number of rotations, can accumulate and lead, if not corrected, to a lack of solar tracking precision.

### Summarised description of the invention

In order to solve the above drawbacks, the present invention describes, according to a first aspect, a solar tracker that allows greater solar tracking precision, in accordance with the first independent claim. According to a second aspect, a tracking method using the aforementioned solar tracker is presented according to the second independent claim. The tracking method preferably includes, in a complementary manner, a calibration to correct possible precision and/or positioning errors. Other optional advantageous features are described in the dependent claims and in the detailed description of a preferred exemplary embodiment. The invention also relates to a method for obtaining a home position, also referred to as zero position, which is used for determining other positions necessary for the tracking method, such as, for example, the tracker position or the solar position. Similarly, the zero position is also related to the calibration position.

By means of the solar tracker and the solar tracking method of the invention, greater tracking precision is achieved. In addition, it avoids operating in conditions in which a significant precision error has accumulated in the tracking position, which favours greater solar energy harvesting.

The calibration and determination of the home or zero position is important because the motor is expected to have an internal referencing system, such as, for example, an encoder, or in a more simplified form, a Hall effect sensor or revolution counter system, such that position measuring devices on the moving part of the solar tracker (for example angle measuring devices on the output shaft of the reduction gear, torque tube or solar panels) are not necessary. Accordingly, although the invention is applicable both for solar trackers with mobile electronics, it has an advantageous use when the tracker has fixed electronics.

When the referencing system is placed in a fixed part of the drive, the proposed solution allows knowing the internal tracker position, but somehow, it is necessary to relate it to an external position (preferably zero-degree position, which implies that the solar panels are in a horizontal position) so that both positions (internal to the system and external) are coordinated in order to be able to implement the solar tracking. Relating both positions after mechanical assembly or a maintenance process is vital, because the drive could be assembled in different orientations due to the geometry of the terrain and the manufacturing and assembly tolerances of the mechanical components of the tracker.

In order to coordinate the aforementioned positions, the following terms are defined:
- Reference position (digital and internal to the system): It is defined by a digital ("software") position stored in memory, and therefore internal to the system. It is coincident with the calibration position.
- Calibration position (physical and internal to the system): It is defined by first placeholders, which are preferably measurable, physical elements (for example protrusions, indentations, etc.) belonging (internal) to the system. It represents an internal physical (hardware) position of the system, the position of which with respect to the environment remains unchanging over time as long as there are no alterations to the environment (ground settlement, relative movements between mechanical components of the tracker, etc.).

- Coupling position (physical and internal to the system): It is defined by a theoretical position in which the fixed part and the moving part of the drive of the tracker are oriented at a predetermined relative angle. Generally, in solar trackers, and preferably in this invention, it is defined as the position in which the solar panels are in a horizontal position when the fixed part of the drive is also supported on a horizontal plane. In certain cases, and optionally, the calibration position can be taken as the docking position, as both are physical positions and internal to the system (this is equivalent to considering both positions to be coincident).
- Zero position (physical magnitude and external to the system, but stored as digital): It is defined by a real, measurable, unchanging magnitude in the environment (external to the system), but managed and/or stored in the system as a digital position. It is preferably defined as the position in which the solar panels are horizontal, regardless of the orientation and/or inclination of the fixed part of the solar tracker.

The positions described above are related as follows:
- The reference position (internal digital position of the system) is related to the calibration position (internal physical position of the system) since the comparison criteria state that they must be coincident. The calibration method serves to (re-)associate both calibration and reference positions and to be able to eliminate deviations/errors that may have accumulated internally in the system.
- The zero position (physical and external to the system) can be related "manually" to the reference position by means of "manual" measurements, which involve an operator, or alternatively, by means of "automatic" measurements which require no operator. This operation is implemented the first time the tracker is started after assembly or after implementing any type of maintenance that may alter the predefined conditions in the tracker itself (change of components, mechanical adjustment, etc.). The physical quantity representing the zero position, and which is external to the tracker, is thereby memorised and related as a digital position inside the tracker. Once the zero position is known by the tracker, said zero position is taken as the origin for determining the other positions associated with the tracking, such as, for example, the tracker position or the solar position. The zero position of the system will be correct as long as the reference position and the calibration position are coincident (this must always be met), because the calibration position is a fixed physical position, and the relationship between the reference (digital) position and the zero (digital) position is constant (relationship defined in the "method for obtaining the zero or home position of the system"). Alternatively, and with the same objective as stated above, the definition of the zero position can also be implemented in "automatically", which further requires knowing or determining a known position, referred to as "docking position", mentioned above, in which the fixed and moving parts of the drive of the solar tracker are oriented at a predefined relative angle.
- The docking position (physical and internal to the system) can optionally be used as a complementary position to the previous ones, and more specifically, in the "automatic" determination of the zero position in the field. For this purpose, the system must have automatic angle measuring devices on the fixed part of the drive, which are adjusted in controlled environments to a predetermined (preferably horizontal) inclination when the system is in this docking position. Thus, once the value of the angle (or inclination) of the fixed part is stored in the memory, the value of the moving part is also known, since both the fixed and moving parts of the drive are oriented according to the aforementioned relative position. Similarly, the calibration (and reference) positions can also be related to the docking position, since the relationship between them is constant as they are physical elements. As a result of this process, the reference, calibration and docking positions are related and memorised in the system. In addition, the process described above can be completed prior to assembly of the solar tracker in the field when the physical components of the calibration are pre-assembled on the drive. Subsequently in the field, by means of the angle measuring devices located on the fixed part of the drive, the system is able to quantify the magnitude of the assembly angle or inclination with respect to the value previously memorised in the controlled environment, and thereby relate the reference, calibration and/or docking positions to the zero position without the need to use external measuring elements. Once the zero position is known "automatically" by the tracker, this zero position is taken as the origin to determine the other positions associated with the tracking, such as the tracker position or the solar position, as occurred in the "manual" process.

### Brief description of the figures

The advantages mentioned above, as well as other advantages and features of the present invention, will be better understood with reference to the following detailed description of preferred embodiments in reference to the attached figures, which should be considered for purposes of illustration and not limitation, and in which:
Figures 1A and 1B show a sectional perspective view (Figure 1A) and a bottom perspective view (Figure 1B) of the solar tracker object of the present invention.
Figure 2 shows a flowchart of a tracking method using the tracker of Figure 1.
Figure 3 shows a detailed flowchart of a first embodiment of the calibration process of the tracking method of Figure 2.
Figure 4 shows a detailed flowchart of a second embodiment of the calibration process of the tracking method of Figure 2.
Figure 5 shows a flow chart of a zero referencing process performed manually.
Figure 6 shows a flow chart of a zero referencing process performed automatically.

### List of references:

1 Torque shaft
2 Controller
3 Drive
4 Motor
5 Reduction system
6 Revolution counter system
7 First placeholders
8 First detectors
9 Body

### Detailed description of a preferred exemplary embodiment of the invention

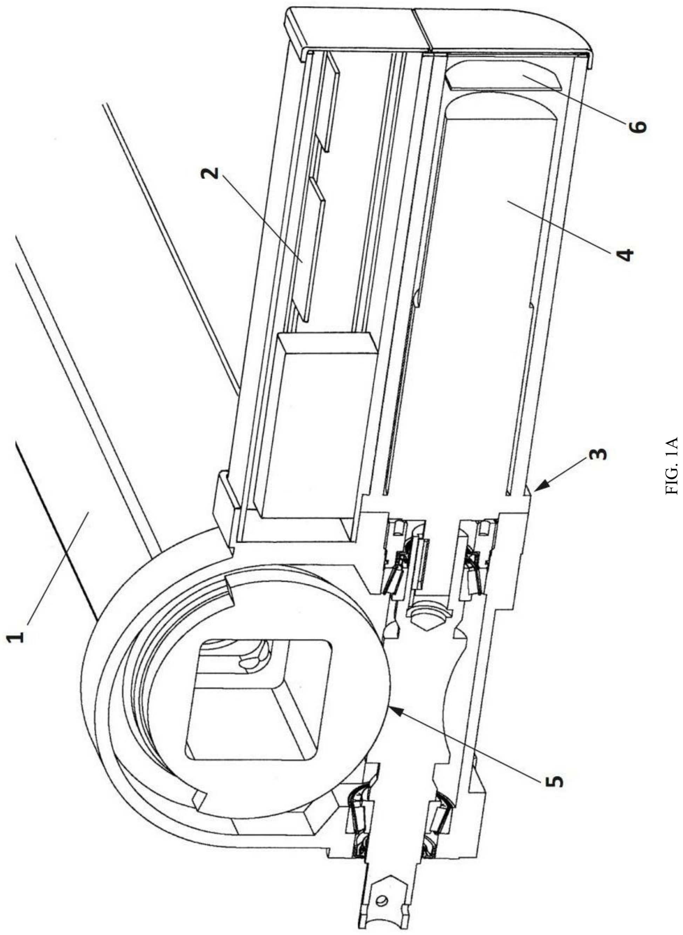

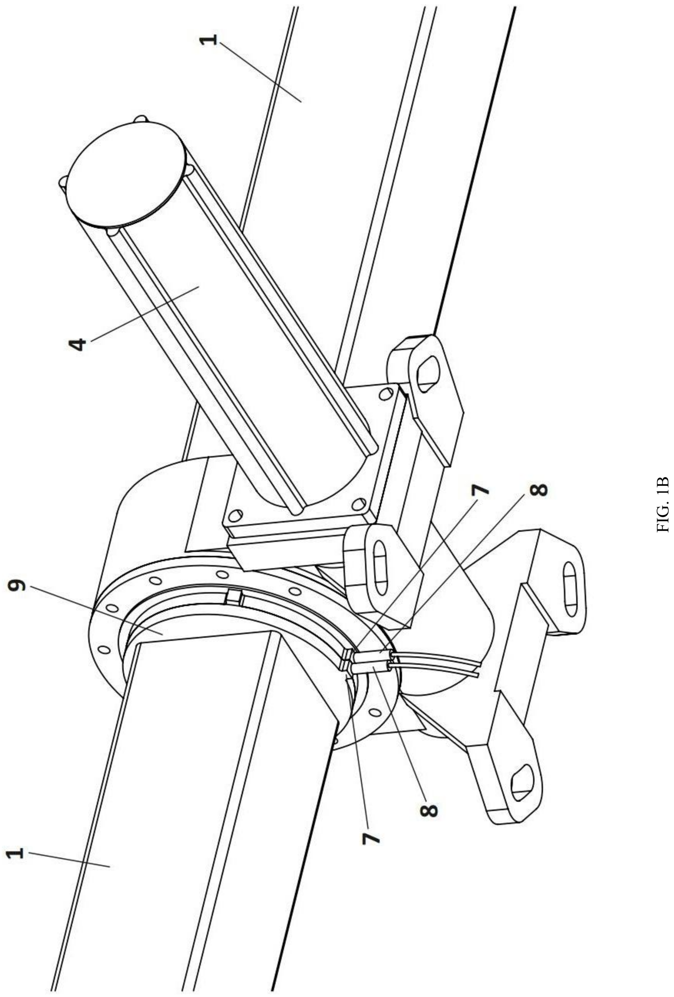

A detailed description of a preferred exemplary embodiment of the present invention is given below with the aid of Figures 1-6.

The present invention has as an object a solar tracker, as well as a solar tracking method that is performed using said solar tracker, in order to obtain greater tracking precision.

### SOLAR TRACKER

As shown in Figures 1A and 1B, the solar tracker conventionally includes a torque shaft (1), which can be made up of a torque tube, a torque box, etc. The torque shaft (1) has a longitudinal direction that defines the solar tracking direction of rotation.

The tracker also has a controller (2) and its associated electronics to manage the rotational position of the torque shaft (1). Additionally, the electronics can fulfil other functions, such as managing communications, peripherals, etc. Preferably, and particularly advantageously, the controller (2) is in a fixed position, i.e. it is not affected by the rotation of the torque shaft of the tracker.

To provide tracking rotation to the torque shaft (1), the tracker further includes a drive (3), which has a motor, (4) and a reduction system (5) sandwiched between the motor (4) and the torque shaft (1). The motor (4) and reduction system (5) may be integrated together in a geared motor, as is conventional. There is, for example, included as part of the motor (4) itself, a revolution counter system (6) for controlling and counting the number of revolutions of the motor (4), such as, for example, an encoder, a Hall effect sensor, etc. Therefore, the controller (2) has stored therein a zero position, which is the position from which the number of revolutions of the motor (4) is counted, in one direction of rotation or in the opposite direction, in order to determine the tracking position. With regard to the reduction system (5), any type of mechanical reduction system (5) is contemplated, be it a worm and wheel type, planetary, or other, or even combinations of several, such that the rotation of the torque shaft (1) is less than the rotational movement of the motor shaft (4), according to the reduction ratio of the reduction system (5). As explained above, the revolution counter system (6) is communicated with the controller (2) and the drive (3) to advantageously control the solar tracking rotation by means of the number of revolutions and the direction of rotation of the motor (4) detected by the revolution counter system (6).

The follower of the invention is notable for additionally including at least one first placeholder (7), although for reasons of redundancy, a solution with several first placeholders (7), in particular two first placeholders (7), is proposed as preferable, the first placeholder(s) (7) being kinematically solidly connected, at least during tracking, to the torque shaft (1), for example, made on the torque shaft (1) itself or any element solidly connected to the output shaft of the reduction system (5). Said first placeholders (7) can take various configurations, such as, for example: projections, indentations, accessories, etc. In cooperation with the first placeholders (7), the tracker also includes respective first detectors (8), corresponding with the first placeholders (7), as well as configured and arranged to detect the presence or absence of their corresponding first placeholder (7). As explained below, the angular location of the first placeholders (7) defines what is hereinafter referred to as the "calibration position" in order to be able to check, according to a calibration process explained below, whether said calibration position is coincident with the position stored in the system as the "reference position", and which in turn also has a relationship with the "zero position". According to a preferred example, the first placeholders (7) are located on a part of the reduction system (5) which is in solidly connected to the torque shaft (1). According to another preferred example, the first placeholders (7) are located directly on the torque shaft (1). In turn, the first detectors (8) are located in a fixed part of the tracker, so as not to be solidly connected with the first placeholders (7). As examples of first detectors (8), magnetic detectors or push-button type detectors are, without prejudice, preferred.

The combination of the first placeholders (7) and the first detectors (8) makes it possible to check the position of the torque shaft (1) with the stipulated frequency. This check allows to verify whether the reference position, which is called on to perform the check, coincides with the calibration position. This is equivalent to, once the calibration position has first been identified as the position in which the first detectors (8) detect their corresponding first placeholders (7), and has been stored as the reference position, verifying whether, when the tracker is called to the reference position, i.e. when the tracker is rotated to a position that is located far away, in the appropriate direction, by the number of revolutions separating the reference position from the position that the tracker is in at that moment, the first detectors (8) detect the presence of the first placeholders (7) (or not) since, after a certain number of cycles, errors may have accumulated in the referencing of the motor (4), such as, for example, in counting the revolutions of the motor (4), and therefore causing a certain deviation in the angular position of the torque shaft (1).

By way of illustration, the figures show a possible solution for the first placeholders (7), wherein each first placeholder (7) constitutes a protrusion of a corresponding rigid body (9), for example a disc, solidly connected to the outside of the torque shaft (1), to be detected by the first detectors (8), in principle, one first detector (8) for each of the first placeholders (7). The first detectors (8) thereby detect the presence of first placeholders (7), such as, for example, as indicated above, protrusions, in a predefined reference position for the check (preferably in a central position of the stroke, also known as "system centre"), so that, as a consequence, the position memorised in the system could be checked against the signal provided by these first detectors (8), since both should be coincident. That is, if each of the first detectors (8) detects its corresponding first placeholder (7) when the check is performed, it means that a significant error has not yet accumulated, i.e. the position stored as "reference position" still coincides with the physical position called "calibration position", whereas if none of the first detectors (8) detects its corresponding first placeholder (7) when the check is performed, it is because a significant error has accumulated. The case in which the first placeholders (7) are detected only by some of the first detectors (8), and not by all of the first detectors (8), indicates a failure of the first detectors (8), so the incorporation of two (or more) first detectors (8) allows checking that the first detectors (8) are working properly, by having repetitive signals.

To perform the check, a movement is triggered in which the torque shaft (1) is ordered to rotate to the previously stored reference position in which the first placeholders (7) are expected to be detectable by (for example, facing) the first detectors (8), i.e. an instruction is issued indicating how many revolutions and in which direction the motor (4) is to rotate. If, after said instruction has been performed, the first detectors (8) are unable to detect the first placeholders (7), it is deduced that a significant error has accumulated in the angular position of the torque shaft (1), which may affect tracking performance.

The location of the first placeholders (7) and the first detectors (8) is first adjusted at the time of assembling the drive (3) and/or the solar tracker, or alternatively during a maintenance operation, so that once they are adjusted and fixed, the calibration position is defined. This calibration position is then memorised in the controller (2), the reference position thus being defined in said controller (2). Finally, the zero position of the drive (3) or solar tracker is identified (preferably coincident with the horizontal position of the panels) by means of measuring systems (not shown) that can be both external and internal, and is also memorised in the controller (2). Once the zero position is known by the tracker, said zero position is taken as the origin for determining the other positions associated with the tracking, such as, for example, the tracker position or the solar position. As a result of this process, the zero position will be correct as long as the reference position and the calibration position, which, as described above, is defined by the first placeholders (7) and the first detectors (8), are coincident.

In a complementary manner, second placeholders (not shown), also kinematically solidly connected, at least during tracking, to the torque shaft (1), may be included in cooperation with second detectors (not shown), to be used as end-of-travel mechanisms, such that if the torque shaft (1) rotates out of control in either direction, a detection by the corresponding second detector of the second placeholder corresponding to said direction would identify that the torque shaft (1) has reached the end of its preset range of rotation in one direction, which may be used to trigger an alarm and, if applicable, stop the rotation of the tracker to preserve the structural integrity of the tracker, whereby the present invention produces an additional advantage if the check of the correct operation of the first detectors (8) and second detectors is implemented from time to time and/or when the electronics of the controller (2) are reset/started. Furthermore, when the system configuration so allows it, the first detectors (8) may be used to detect both the first placeholders (7) and the second placeholders, so in these cases, the second detectors coincide with the first detectors (8) or, equivalently, the first detectors (8) would have a dual function and the second detectors would not be required.

Preferably, the second placeholders remain, in use, solidly connected to the torque shaft (1), as do the corresponding first placeholders (7), such that, preferably, the second placeholders are adjustable and, therefore, movable before use, and subsequently, in use, they are solidly connected to the torque shaft (1). By way of example, for the case referred to above, the first placeholders (7) are protrusions arranged in bodies (9), for example discs, assembled on the torque shaft (1), although they can also be integrated in any other type of element that is sufficiently rigid to allow the circular path implemented by the rotation of the torque shaft (1) to be developed. The second placeholders may be formed as additional protrusions on the same bodies (9) on which the first placeholders (7) are located, or alternatively, be arranged on other independent bodies and/or be supported by another type of support element. In particular, for the example shown in the figures, the second placeholders corresponding to ends-of-travel for different directions are preferably located on different bodies (9), since each of the second placeholders thereby actuates the corresponding second associated detector (it is not possible for it to actuate the second opposite position detector, as it is located on a different path). As a result, the system is able to identify whether rotation limits have been exceeded in one direction or the other.

### SOLAR TRACKING METHOD

The solar tracking method that is proposed, using the solar tracker described above, is characterised in that, based on the definition and knowledge of the reference position, the calibration position, the zero position and, if applicable, the docking position, the movements of the solar tracker are determined as a number of revolutions, counted by the revolution counter system (6) of the solar tracker, together with their corresponding direction of rotation, which the motor (4) is required to rotate from the position of each moment.

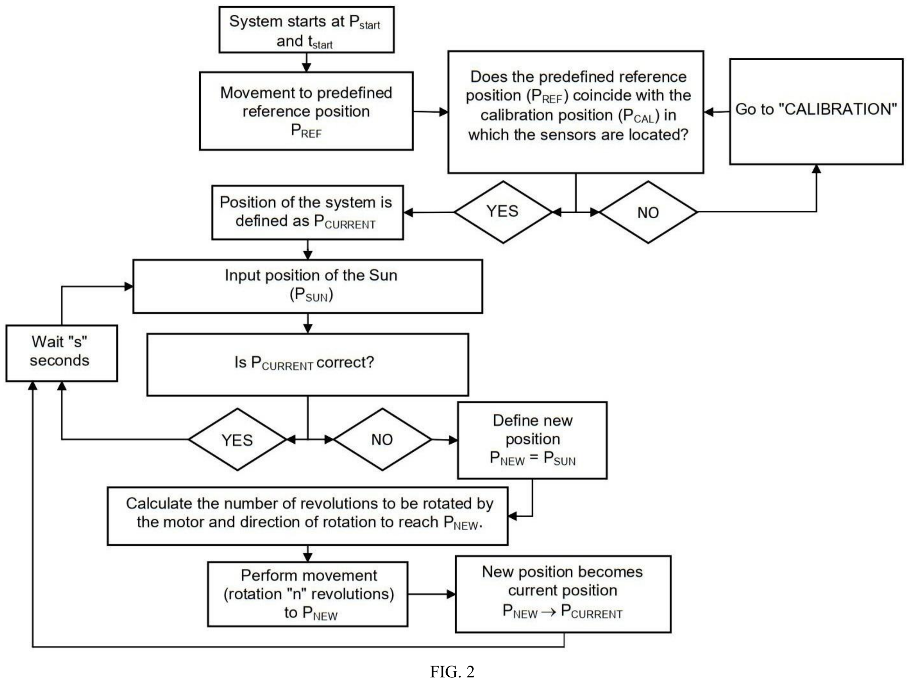

According to a preferred embodiment, illustrated by means of Figure 2, the solar tracking method described above comprises an additional step, according to which the tracker is brought to the previously stored reference position, i.e. the number of revolutions that the motor (4) should theoretically rotate, and in which direction, is determined from the current tracker position and the stored reference position, knowing the zero position, and then the motor (4) is rotated said number of revolutions in the determined direction. This action (bringing the tracker to the reference position) is implemented, for example, when starting and/or resetting the system, when requested by an operator for maintenance, or simply periodically in operation after a preset time interval.

Once the rotation of the previous step has been performed, the tracker, in particular the torque shaft (1), may actually be in the angular position corresponding to the reference position, or it may, due to accumulated errors, be significantly out of the reference position. To find this out, the check explained above to see whether all first detectors (8) or second detectors detect their corresponding first placeholder (7) or second placeholder is performed.
- If they do not, the tracking is interrupted because it is understood that the tracker may be out of calibration. Preferably, a calibration method is performed, whereby such method determines the location of the reference position again, as explained below.
- If they do, it is understood that the tracker is calibrated, and tracking is continued.

According to the case that they do, the tracking method of the present preferred embodiment is continued, so the tracker position is identified as the "current position", and the solar position is determined, after which the solar position is compared with the current position. The solar position can be determined in various ways, such as: from solar tables, which indicate solar position, for a given land location, depending on the day of the year and the time of day; through measurement, for example by means of sensors; through forecasts; etc.

The comparison referred to in the previous paragraph is intended to check whether the tracker is correctly positioned or whether it is necessary to rotate the tracker to a more suitable position, and it consists of verifying whether the solar position and the current position are sufficiently close, i.e. whether the solar position is within a predetermined range that includes the current position, or equivalently, whether the current tracker position is within a predetermined range that includes the solar position.

If, according to the above comparison, the current tracker position is correct, then the tracker is correctly oriented and there is no need to change its orientation, so the next step would be to wait for a predetermined time interval, determine the solar position again, and repeat the comparison of the new solar position with the current position.

If the condition of the above comparison is not met, or when it is no longer met, it is understood that the tracker is incorrectly oriented and its orientation needs to be changed. Accordingly, it is determined from the solar position and the current position the number of revolutions that the motor (4) has to be rotated, and in which direction, to reach the solar position from the current position, and said rotation is performed, after which the tracker position is stored as the current position.

Then, after optionally waiting for a predetermined wait time, the process of "determining the solar position", "comparing it with the current position", and acting accordingly as explained above, is repeated again.

Optionally, in the preferred embodiment being described, the solar tracking method allows for the implementation of a position checking process, called "calibration process", as explained below, which is equivalent to identifying the location, with respect to a known position, of the calibration position and verifying that in that position the first detectors (8) detect the presence of the first placeholders (7), at the time and frequency to be determined.

By using the solar tracking method explained above, improved tracking is achieved which allows for greater tracking precision, and therefore greater energy production, and also allows the system orientation to be identified and corrected if the tracker is out of calibration.

### CALIBRATION PROCESS

As indicated above, in the preferred embodiment in which checking whether the reference position and the calibration position coincide is carried out, as explained above, the tracking method of the invention may additionally include a calibration process, whereby a new reference position is determined and stored from a previously adjusted and fixed calibration position. This is equivalent to identifying the location, with respect to the zero position, of the calibration position and verifying whether the first detectors (8) detect the presence of the first placeholders (7). Conversely, failure to detect the calibration position may be due either to movement and/or precision errors accumulated internally in the system, or because, due to assembly or maintenance operations, the configuration of the tracker has changed, affecting the location of the first placeholders (7) or the first detectors (8) in relation to the zero position.

The calibration process involves rotating the torque shaft (1), according to a preset criterion, until all first detectors (8) detect the first placeholders (7), i.e. until the location of the calibration position is detected, which position is stored, as described above, as the new reference position.

Calibration is generally desirable to allow automated self-adjustment and thus eliminate the effect of deviations/errors that may have accumulated, as long as there are no events that require restarting the tracker, since they affect the configuration of the tracker, such as the first assembly or maintenance actions, in which case the zero position, also referred to as the "home position", could be (re)defined either manually, through measurements performed by an operator, or automatically, as explained below.

Calibration would not be necessary if the tracker is sufficiently robust so as not to accumulate significant errors in small periods, for example periods shorter than those determined on the basis of scheduled maintenance. Omitting calibration deprives the option of centrally monitoring the tracking precision in real time, such that checking the precision would require sending operators to perform maintenance manually, similar to when the zero position of the system is first defined, as explained below. That is, it would involve moving the tracker to a predetermined physical position corresponding, in theory, with the zero position and checking whether said predetermined physical position actually corresponds with the zero position, using a measuring device. This option, while theoretically plausible, seems unlikely except for extraordinarily robust trackers.

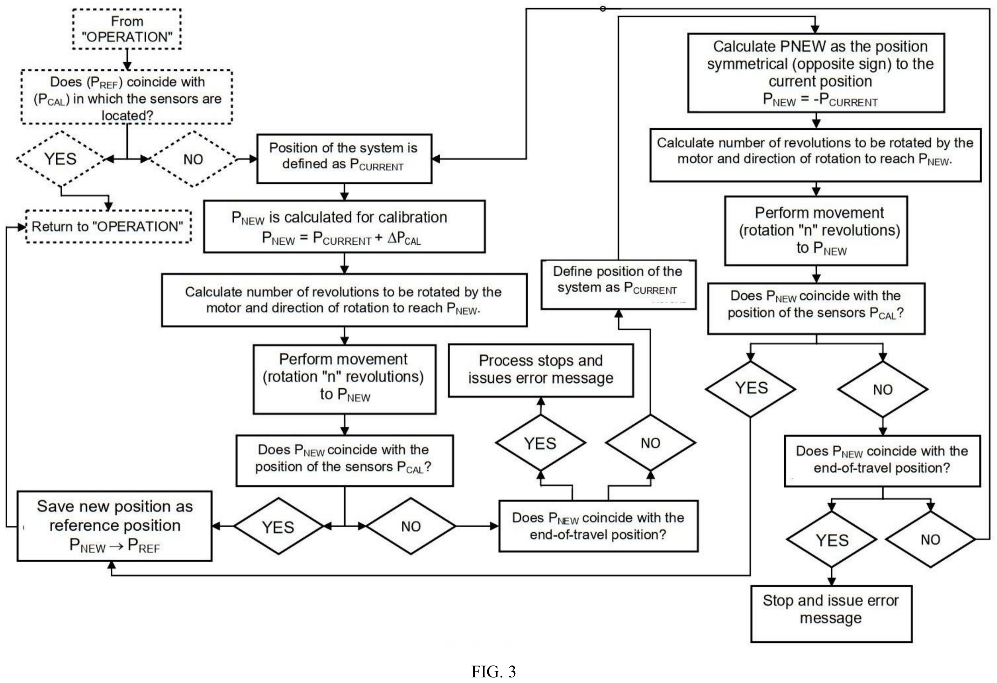

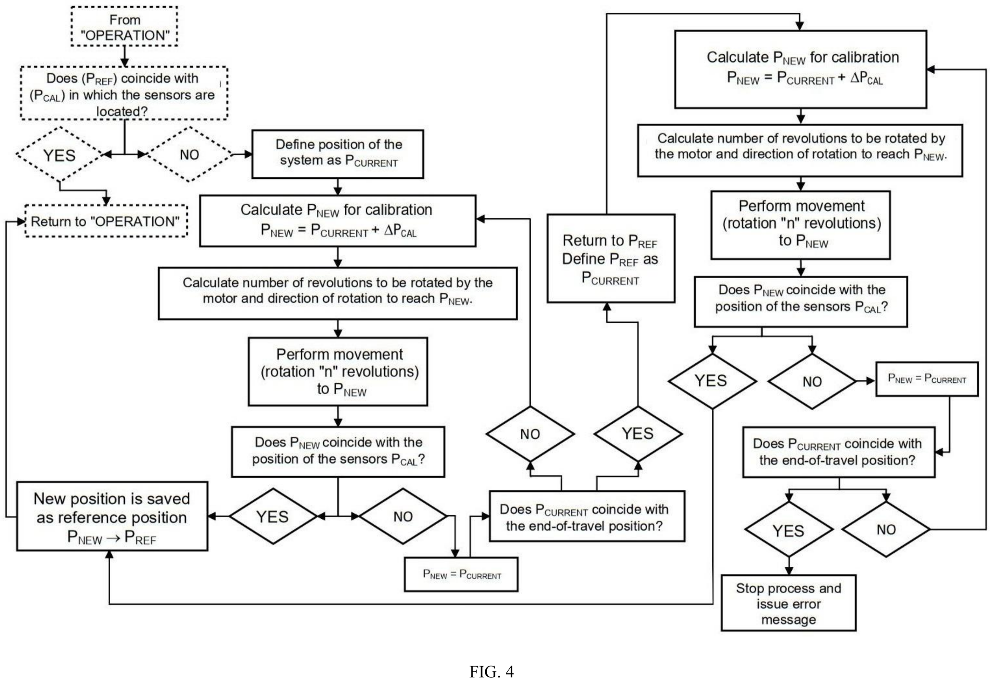

Two preferred exemplary embodiments of the calibration method are described below with the aid of Figures 3 and 4.

### CALIBRATION 1: SCANS IN OPPOSITE DIRECTIONS WITH INCREASING AMPLITUDE

According to a first example, illustrated by means of Figure 3, the preset criterion for locating the calibration position, i.e. for the location of the first placeholders (7), is to start from the current reference position, which has already been found not to coincide with the calibration position, i.e. in which the detectors (8) do not detect the first placeholders (7), and perform successive pairs of scans, wherein each pair of scans comprises two scans, one in one direction and the other in the opposite direction, with the same amplitude with respect to the reference position, and wherein the successive pairs of scans exhibit increasing amplitudes with respect to the reference position.

The first example is explained in more detail below in the light of aforementioned Figure 3.
1A - Starting from the reference position, which is redefined as the current position.
1B - Defining a new position, which is separated from the reference position by a predetermined amplitude, in one of the two directions. This can be done, for example, by determining the number of revolutions that the motor (4) has to be rotated, taking into account the reduction ratio, in the chosen direction, to reach the new position.
1C - Rotating the tracker until it reaches the new position.
1D - In the new position, checking whether the first detectors (8) detect the first placeholders (7).
   - If they do, the new position is identified with the desired calibration position, which is stored as the reference position, and the calibration is successfully completed.
   - If they do not, the calibration is not yet complete (it continues to 1E).
1E - Storing the new tracker position as the current position.
1F - Defining another new position, which consists of the symmetrical position of the current position with respect to the reference position, for example by determining the number of revolutions that the motor (4) has to be rotated in the opposite direction, taking into account the reduction ratio, to reach the new position (in theory, the number of revolutions would be twice the number of revolutions previously rotated in the other direction).
1G - Rotating the tracker until it reaches the new position.
1H - In the new position, checking whether the first detectors (8) detect the first placeholders (7).
   - If they do, the new position is identified with the desired calibration position, which is stored as the reference position, and the calibration is successfully completed.
   - If they do not, the calibration is not yet complete (it continues to 11).
1I - Storing the new tracker position as the current position and returning to step 1B, considering a larger amplitude.
1J - Continuing from step 1B.
1K - Optionally, after obtaining a negative result in either step 1D or 1H, verifying whether the current position exceeds a predetermined limit position that the tracker must not exceed. This can be done, for example, by counting revolutions from the zero position, and verifying whether the number of revolutions the current position is at from the zero position exceeds, in the appropriate direction, a predetermined threshold number. Alternatively, the second placeholders and second detectors can be used, such that it relates to verifying whether, in the current position, any of the second detectors detects its corresponding second placeholder.
   - If it does, the calibration is completed without success and an error message is issued.
   - If it does not, the calibration continues (continuing to 1E if the step prior to this check was 1D, or continuing to 1I if the prior step was 1H).

### CALIBRATION 2: CONSECUTIVE FULL SCANS IN BOTH DIRECTIONS

According to a second example, represented by Figure 4, the preset criterion for locating the calibration position, i.e. for the location of the first placeholders (7), is to start from the current reference position, which has already been found not to coincide with the calibration position, i.e. in which the first detectors (8) do not detect the first placeholders (7), and perform two scans, first from the reference position in one direction and, if the first placeholders (7) are not detected, then another scan in the opposite direction.

The second example is explained in more detail below in the light of aforementioned Figure 4.
2A - Starting from the reference position, which is redefined as the current position.
2B - defining a new position, which is separated from the current position by a first predetermined amplitude, in a first direction of the two directions. This can be done, for example, by determining the number of revolutions that the motor (4) has to be rotated, taking into account the reduction ratio, in the first direction, to reach the new position.
2C - Rotating the tracker until it reaches the new position.
2D - In the new position, checking whether the first detectors (8) detect the first placeholders (7).
   - If they do, the new position is identified with the desired calibration position, which is stored as the reference position, and the calibration is successfully completed.
   - If they do not, the calibration is not yet complete (continue to 2E).
2E - Storing the new tracker position as the current position.
2F - Evaluating whether the tracker has reached a predetermined limit position, in said direction, which must not be exceeded. Similarly to the first example of calibration, this can be done in several ways. For example, it can be done by counting revolutions from the zero position, and verifying whether the number of revolutions the current position is at from the zero position exceeds, in the appropriate direction, a predetermined threshold number. Alternatively, the second placeholders and second detectors can be used, such that it relates to verifying whether, in the current position, any of the second detectors detects its corresponding second placeholder.
   - If they do not, the calibration continues without changing direction. It continues to 2B maintaining the direction of rotation.
   - If they do, the calibration must continue changing direction. It continues to 2G.
2G - Returning to the reference position, which is redefined as the current position.
2H - Defining a new position, which is separated from the current position by a predetermined amplitude, in the opposite direction. This can be done, for example, by determining the number of revolutions that the motor (4) has to be rotated, taking into account the reduction ratio, in the opposite direction, to reach the new position.
2I - Rotating the tracker until it reaches the new position.
2J - In the new position, checking whether the first detectors (8) detect the first placeholders (7).
   - If they do, the new position is identified with the desired calibration position, which is stored as the reference position, and the calibration is successfully completed.
   - If they do not, the calibration is not yet complete (it continues to 2K).
2K - Storing the new tracker position as the current position.
2L - Evaluating whether the tracker has reached a predetermined limit position, in said direction, which must not be exceeded.
   - If it has not, the calibration continues without changing direction. It continues to 2H maintaining the direction of rotation.
   - Optionally, if it has, the calibration is completed without success and an error message is issued.

### METHOD FOR OBTAINING THE HOME POSITION OF THE SYSTEM

As indicated above, the controller (2) has stored therein the zero position, which is the position that serves as the origin for calculating positions and movements, since it is from this position that the other positions are determined by counting the revolutions in the appropriate direction of rotation. In particular, the reference position, which reflects the calibration position, is also related to the zero position through the number of revolutions and the direction of rotation that separates it from the zero position, since the relationship between both positions remains constant over time if there are no changes in the environment, for example adjustment or replacement of components, ground settlement, etc.

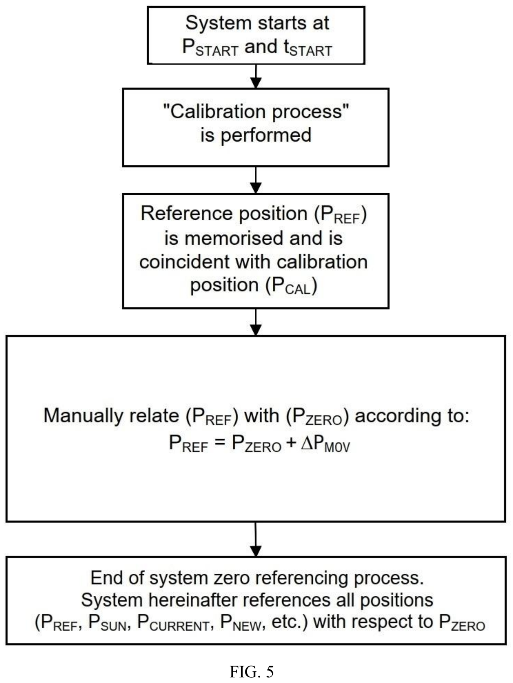

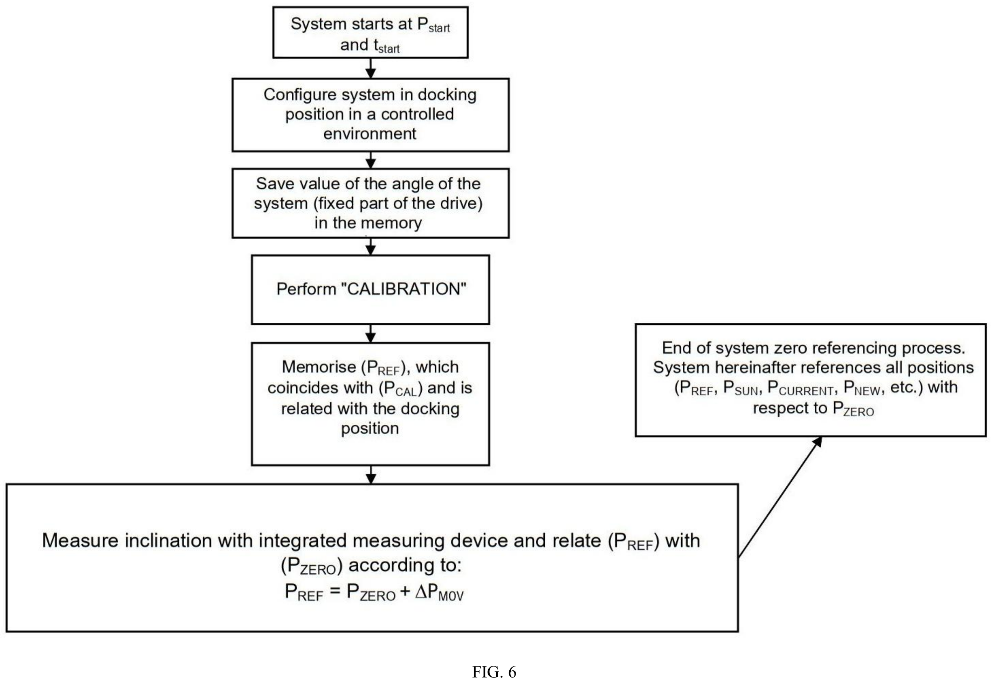

The following section explains examples of determining the zero position, both according to Figure 5 and automatically, according to Figure 6.

In the example described, see Figures 5 and 6, due to the relevance of the calibration position for the tracking method, the zero position is determined by means of measurement in relation to the reference position. That is:
- First, the calibration process is carried out to determine the calibration position, which is stored as a reference position;
- Measurements, such as angular measurements, are then carried out to physically determine that tracker position intended to correspond with the zero position, for example, a position with a horizontal orientation or a position with a vertical orientation; and
- Finally, the relationship between the reference position and the zero position is determined, i.e. the number of revolutions at which, and in which direction of rotation, the zero position is located from the stored reference position. From there, the zero position is then used as the base position, in other words, the home position of the system, from which all the other positions (solar position, current position, reference position, new position) are determined, as explained above.

The step of determining the tracker position intended to correspond with the zero position can preferably be carried out by selecting which physical position is intended to correspond with the zero position, for example a horizontal or vertical orientation, etc., and placing the tracker in said predefined physical position, with the help of measurements, where the measurements can be carried out either by an operator, i.e. manually, see Figure 5, or automatically, see Figure 6, by having angle measuring devices located in the fixed part of the drive. The system is thereby able to quantify the magnitude of the assembly angle or inclination of the solar tracker in the field with respect to the value previously memorised in the controlled environment, and thereby relate the reference, calibration and/or docking positions to the zero position automatically, without the need to involve an operator. In any of the previous processes of orienting the tracker according to the predefined physical position, the controller (2) has already counted the number of revolutions and the direction of rotation that separate it from the reference position, so all that remains is to identify the predefined physical position as the zero position, and to store its coordinates as the origin for all the other positions.

## Claims

1. A solar tracker comprising:
- a torque shaft (1) with a longitudinal direction defining a solar tracking direction of rotation;
- a controller (2), with associated electronics, for managing the rotational position of the torque shaft (1);
- a drive (3), for providing the tracking rotation to the torque shaft (1), and having a motor (4) and a reduction system (5) sandwiched between the motor (4) and the torque shaft (1); and
- a revolution counter system (6), for controlling and counting the number of revolutions and the direction of rotation of the motor (1) with respect to a preset position referred to as the zero position previously stored in the controller (2);
**characterised in that** additionally:
- the revolution counter system (6) is communicated with the controller (2) and the drive (3) to allow control of the solar tracking rotation by means of the number of revolutions and the direction of rotation of the motor (4), with respect to the preset zero position, detected by the revolution counter system (6).

2. The solar tracker according to claim 1, wherein the revolution counter system (6), such as an encoder or a Hall-effect sensor, is part of the motor (4).

3. The solar tracker according to any of claims 1-2, wherein the controller (2) is not solidly connected to the torque shaft (1), so as not to be affected by the tracking rotation.

4. The solar tracker according to any of the claims 1-3, additionally including:
- at least one first placeholder (7), kinematically solidly connected, at least during tracking, to the torque shaft (1), the at least one first placeholder (7) being preferably located directly on the torque shaft (1); and
- at least one first detector (8), or respective first detectors (8), in correspondence with the first placeholders (7), and configured and arranged in a kinematically non-solidly connected manner with respect to the torque shaft (1), to detect the presence or absence of their corresponding first placeholder (7).

5. The solar tracker according to claim 4, wherein each first placeholder (7) constitutes a projection, indentation, accessory or protuberance of a corresponding rigid body (9), such as a disc, solidly connected to the torque shaft (1), to be detected by the first detectors (8).

6. The solar tracker according to any of claims 1-5, additionally including one or more second placeholders, kinematically solidly connected, at least during tracking, to the torque shaft (1), in cooperation with second detectors kinematically not solidly connected to the torque shaft (1), wherein the second placeholders are intended to be used as end-of-travel mechanisms to detect whether the torque shaft (1) has reached a predetermined end position in any of the directions of rotation.

7. The solar tracker according to any of claims 4-6, wherein the first placeholders (7) and/or the second placeholders are adjustable and, therefore, movable before use, as well as being intended to remain kinematically solidly connected to the torque shaft (1) during tracking.

8. The solar tracker according to claim 5, wherein the second placeholders are configured as additional projections, indentations, accessories or protuberances in the same bodies (9) in which, or in bodies other than those in which, the first placeholders (7) are located.

9. A solar tracking method using the solar tracker of claims 1-8, **characterised in that** it comprises a step of determining positions of the solar tracker by means of the controller (2), and carrying out movements of the solar tracker by means of the drive (3), based on the number of revolutions and the direction of rotation, of the motor (4), with respect to the preset position, detected by the revolution counter system (6).

10. The solar tracking method according to claim 9, further comprising the following steps:
- the controller (2) has stored therein the following positions:
- zero position, which serves as the origin and, in relation to the zero position;
- current position, which is the position in which the tracker is located;
- determining the solar position;
- checking whether it is necessary to change the tracker position by comparing the solar position with the current position;
- if the check determines that the tracker position does not need to be changed, waiting for a predetermined time interval, determining the solar position again, and repeating the check to see whether the tracker position needs to be changed;
- if it is determined that the tracker position needs to be changed, determining from the solar position and the current position the number of revolutions the motor (4) needs to be rotated, and in which direction, to reach the solar position from the current position, performing said rotation, storing the tracker position as the current position, waiting a predetermined time interval, determining the solar position again, and repeating the check to see whether the tracker position needs to be changed.

11. The solar tracking method according to claim 10, wherein:
- the controller (2) additionally has stored therein a reference position, which is the tracker position in which the first placeholders (7) are detected by the first detectors (8);
- wherein the solar tracking method further includes the following steps:
- ordering the transfer of the tracker from the current position to the reference position by rotating the motor (4), in the appropriate direction, a number of revolutions which, as stored, separate the current position from the stored reference position;
- verifying whether, in the reference position, the first detectors (8) detect the first placeholders (7);
- if the first detectors (8) detect the first placeholders (7), updating the current position in the controller;
- determining the solar position;
- checking whether it is necessary to change the tracker position by comparing the solar position with the current position;
- if it is determined that the tracker position does not need to be changed, waiting for a predetermined time interval, determining the solar position again, and repeating the check to see whether the tracker position needs to be changed;
- if it is determined that the tracker position needs to be changed, determining from the solar position and the current position the number of revolutions the motor (4) needs to be rotated, and in which direction, to reach the solar position from the current position, performing said rotation, storing the tracker position as the current position, waiting a predetermined time interval, determining the solar position again, and repeating the check to see whether the tracker position needs to be changed.

12. The tracking method according to claim 11, wherein if the first detectors (8) do not detect the first placeholders (7) in the current tracker position, a calibration process is performed to determine the location of the calibration position again and to store it as a reference position, and comprising the steps of rotating the torque shaft (1), according to a preset criterion, until the first detectors (8) detect the first placeholders (7), and storing the tracker position when this occurs as the new reference position.

13. The tracking method according to claim 12, wherein the calibration process comprises:
- 1A: starting from the reference position, which is stored as the current position;
1B: defining a new position, which is separated from the reference position by a predetermined amplitude, in one of the two directions;
1C: rotating the tracker until it reaches the new position;
1D: in the new position, checking whether the first detectors (8) detect the first placeholders (7);
- if they do, identifying the new position with the calibration position sought, which is stored as the reference position, and successfully completing the calibration;
- if they do not:
1E: storing the new tracker position as the current position;
1F: defining another new position, which consists of the symmetrical position of the current position with respect to the reference position;
1G: rotating the tracker until it reaches the new position;
1H: in the new position, checking whether the first detectors (8) detect the first placeholders (7);
- if they do, identifying the new position with the calibration position sought, which is stored as the reference position, and successfully completing the calibration;
- if they do not:
1I: storing the new tracker position as the current position and returning to step 1B, considering a larger amplitude;
1J: continuing from step 1B.

14. The solar tracking method according to claim 13 wherein if a negative result is obtained in either step 1D or 1H, said method additionally includes:
- verifying whether the current position exceeds a predetermined limit position that the tracker must not exceed;
- if it does, issuing an error message and completing the calibration;
- if it does not, continuing the calibration by returning to step 1E if the step prior to this check was 1D, or continuing with step 1I if the prior step was 1H.

15. The solar tracking method according to claim 12, wherein the calibration process comprises the following steps:
2A: starting from the reference position, which is redefined as the current position;
2B: defining a new position, which is separated from the current position by a first predetermined amplitude, in a first direction of the two directions;
2C: rotating the tracker until it reaches the new position;
2D: in the new position, checking whether the first detectors (8) detect the first placeholders (7);
- if they do, identifying the new position with the calibration position sought, which is stored as the reference position, and successfully completing the calibration;
- if they do not:
2E: storing the new tracker position as the current position;
2F: evaluating whether the tracker has reached a predetermined limit position, in said direction, which must not be exceeded;
- if it has not, returning to 2B, maintaining the direction of rotation;
- if it has:
2G: changing the direction of rotation and returning to the reference position, which is redefined as the current position;
2H: defining a new position, which is separated from the current position by a predetermined amplitude, in the opposite direction;
2I: rotating the tracker until it reaches the new position;
2J: in the new position, checking whether the first detectors (8) detect the first placeholders (7);
- if they do, identifying the new position with the calibration position sought, which is stored as the reference position, and successfully completing the calibration;
- if they do not:
2K: storing the new tracker position as the current position;
2L: evaluating whether the tracker has reached a predetermined limit position, in said direction, which must not be exceeded;
- if it has not, continuing with calibration from 2H without changing the direction of rotation.
